# EUROPÄISCHE PATENTSCHRIFT

(11) **EP 3 025 215 B1**
(45) Veröffentlichungstag und Bekanntmachung des Hinweises auf die Patenterteilung: **10.03.2021**
(21) Anmeldenummer: 14746953.0
(22) Anmeldetag: 23.07.2014
(51) Int. Cl.: G06F 3/01, G06K 9/00, G07D 11/20

(54) **VERFAHREN UND VORRICHTUNG ZUR WERTDOKUMENTBEARBEITUNG**
METHOD AND DEVICE FOR PROCESSING VALUE DOCUMENTS
PROCÉDÉ ET DISPOSITIF DE TRAITEMENT DE DOCUMENTS DE VALEUR

(30) Priorität: 24.07.2013 DE 102013012285
(43) Veröffentlichungstag der Anmeldung: 01.06.2016
(73) Patentinhaber: Giesecke+Devrient Currency Technology GmbH, 81677 München (DE)
(72) Erfinder: PIETSCHKER, Andrej, 81825 München (DE); SCHMIDT, Alfred, 81377 München (DE); DIETZ, Jürgen, 81541 München (DE); KÜHN, Timo, 81549 München (DE)
(86) Internationale Anmeldenummer: PCT/EP2014/002020
(87) Internationale Veröffentlichungsnummer: WO 2015/010790

(56) Entgegenhaltungen:
- EP-A2- 0 622 722
- DE-A1- 10 233 233
- DE-A1- 19 806 024
- DE-A1-102004 060 316
- DE-U1-202012 005 255
- US-A- 5 168 531
- US-A1- 2012 314 076

## Beschreibung

Die vorliegende Erfindung betrifft ein Verfahren zur Bearbeitung von Wertdokumenten sowie eine entsprechende Wertdokumentbearbeitungsvorrichtung.

Wertdokumentbearbeitungsvorrichtungen zum Verarbeiten verschiedener Wertdokumente, wie beispielsweise Banknoten, Schecks, Gutscheine, Coupons und dergleichen sind vielfach bekannt. Viele Schritte bei der Bearbeitung solcher Wertdokumente werden durch die Wertdokumentbearbeitungsvorrichtung automatisch durchgeführt, beispielsweise das Vereinzeln von Banknoten, die Prüfung verschiedene Eigenschaften der Banknoten wie beispielsweise der Echtheit, der Denomination, der Umlauffähigkeit und dergleichen. Bei der Echtheitsprüfung können beispielsweise verschiedene Echtheitsmerkmale automatisch geprüft werden.

Trotz des hohen Grades an Automatisierung ist zur Bedienung einer Wertdokumentbearbeitungsvorrichtung weiterhin Bedienpersonal notwendig. Um die Bearbeitung von Dokumenten weiter zu vereinfachen und zu beschleunigen, beschreibt die EP 2 319 026 B1 beispielsweise eine Wertdokumentbearbeitungsvorrichtung, die eingerichtet ist, Ereignisse zu detektieren, die ein Eingreifen einer Bedienperson erfordern. Im Falle des Eintretens eines solchen Ereignisses, beispielsweise eines Papierstaus, öffnet die Vorrichtung automatisch eine entsprechende Abdeckung in der Vorrichtung, um das Bedienungspersonal direkt zu dem entsprechenden Fehler zu führen und einen manuellen Eingriff zu erleichtern.

In der WO 01/43083 A1 wird vorgeschlagen, die Bedienung einer Wertdokümentbearbeitungsvorrichtung dadurch zu erleichtern, dass eine Anzeigevorrichtung zur Darstellung von Symbolen oder Piktogrammen ausgelegt ist, welchen jeweils Funktionen der Bearbeitungsvorrichtung zugeordnet sind. Zur Steuerung der Vorrichtung kann Bedienpersonal über die Piktogramme, beispielsweise mittels einer berührungsempfindlichen Eingabeeinrichtung, wie z.B. einem Touchpad, eine Eingabe vornehmen. Auch eine Sprachsteuerung wird in dem Dokument beschrieben.

Aus der DE19806024 A1 ist bekannt, an einem Geldautomaten auf einer Projektionsfläche eine Tastatur zu projizieren, mittels der der Bediener des Geldautomaten Gerätefunktionen wie "Auszahlung" oder "Einzahlung" auswählen kann.

Aufgabe der vorliegenden Erfindung ist es, ein Verfahren und ein System vorzuschlagen, welche die Dateneingabe in eine Wertdokumentbearbeitungsvorrichtung erleichtern

Die Aufgabe wird durch ein Verfahren und ein System gemäss den unabhängigen Ansprüchen gelöst.

Die grundlegende Idee der vorliegenden Erfindung besteht darin, im Zusammenhang mit der Bearbeitung von Wertdokumenten die Erkennung und Auswertung von Körpergesten zumindest einer Bedienperson zur Dateneingabe und ggf. zur Steuerung zu verwenden.

Ein erfindungsgemäßes Verfahren zur Bearbeitung von Wertdokumenten umfasst demnach die folgenden Schritte:
Mittels einer Kameraeinrichtung wird eine Aktion einer Bedienperson einer Wertdokumentbearbeitungsvorrichtung erfasst und Bilddaten der erfassten Aktion erzeugt. Als Kameraeinrichtung kann dabei insbesondere eine 3D-Kamera verwendet werden, beispielsweise eine Stereo-Kamera oder eine TOF-Kamera. Damit wird es möglich, Aktionen der Bedienperson räumlich zu erfassen und auszuwerten.

Die mittels der Kameraeinrichtung erzeugten Bilddaten, die die Aktion der Bedienperson enthalten, werden in einem nachfolgenden Schritt mittels einer Bildverarbeitungseinrichtung verarbeitet. Zur Bildverarbeitung können bekannte, mittlerweile auch kommerziell erhältliche Bildverarbeitungssysteme verwendet werden. Diese umfassen auf diese Aufgabe hin optimierte Hardware- und Softwaremittel, wie beispielsweise für die Graphikverarbeitung optimierte Prozessoren sowie Software zur Muster- und Bilderkennung. Die Bildverarbeitung an sich ist nicht Gegenstand der vorliegenden Erfindung.

Durch die Bildverarbeitungseinrichtung wird mindestens eine Geste aus den verarbeiteten Bilddaten extrahiert, z.B. eine von mehreren vorgegebenen Gesten. Art und Anzahl der durch die Bildverarbeitungseinrichtung erkennbaren Gesten kann variieren und abhängig sein von der Art der zu steuernden Vorrichtung und/oder der Art in die Vorrichtung einzugebender Daten.

Der zumindest einen extrahierten Geste wird dann eine Eingabeinformation für die Wertdokumentbearbeitungsvorrichtung zugeordnet. Die Zuordnung erfolgt z.B. ebenfalls durch die Bildverarbeitungseinrichtung. Dabei kann grundsätzlich jeder Geste jede beliebige Eingabeinformation zugeordnet werden. Dadurch stellt das vorliegende Verfahren höchste Flexibilität und Anpassbarkeit bereit.

Die Eingabeinformation wird dann in der Wertdokumentbearbeitungsvorrichtung bereitgestellt, damit diese die Eingabeinformation verarbeiten kann. Die Eingabeinformation kann z.B. automatisch, d.h. ohne eine weitere Eingabeoperation der Bedienperson, in die Wertdokumentbearbeitungsvorrichtung eingegeben werden, z.B. drahtlos oder drahtgebunden an diese gesendet werden. Zum Beispiel sind in der Bildverarbeitungseinrichtung eine oder mehrere Gesten vorbestimmt und zu jeder vorbestimmten Geste eine entsprechende Eingabeinformation zugeordnet. Die Bildverarbeitungseinrichtung ordnet der extrahierten Geste dann die entsprechende Eingabeinformation zu und sendet diese dann an die Wertdokumentbearbeitungsvorrichtung, welche die Eingabeinformation empfängt.

Alternativ kann auch die Wertdokumentbearbeitungsvorrichtung selbst der extrahierten Gesten die Eingabeinformation zuordnen. Die Zuordnung, welche Geste welcher Eingabeinformationen entspricht, kann in der Wertdokumentbearbeitungsvorrichtung selbst abgespeichert sein oder dieser von außerhalb zur Verfügung gestellt werden, z.B. über ein Netzwerk.

Schließlich verarbeitet die Wertdokumentbearbeitungsvorrichtung die empfangene Eingabeinformation. Erfindungsgemäß ist die Eingabeinformation eine Dateneingabeinformation. Im Fall einer Geste, die einer Dateneingabeinformation entspricht, übernimmt die Wertdokumentbearbeitungsvorrichtung die in der Dateneingabeinformation enthaltenen Wertdokumentdaten und berücksichtigt diese bei der Abrechnung der Wertdokumente. Gegebenenfalls kann die Eingabeinformation auch eine Steuerinformation sein. Im Fall einer Geste, die einer Steuerinformation entspricht, führt die Wertdokumentbearbeitungsvorrichtung den in der Steuerinformation enthaltenen Steuerbefehl aus. Die Steuerinformation kann veranlassen, dass die Wertdokumentbearbeitungsvorrichtung eine bestimmte Aktion zulässt oder ausführt oder, dass die Wertdokumentbearbeitungsvorrichtung eine bestimmte Aktion (die sie aufgrund ihres Betriebs ansonsten ausführen würde), nicht zulässt oder nicht ausführt. Die Bedienperson kann mittels einer Geste eine Steuerinformation abgeben, durch die eine bestimmte Aktion der Vorrichtung verhindert wird. Zum Beispiel kann die Bedienperson mit Hilfe einer Geste das automatische Öffnen einer Tür der Vorrichtung (im Fall einer Störung) verhindern, wenn sie sich im Bereich vor der Tür befindet.

Beispielsweise wird durch eine Geste des Bedieners eine Steuerinformation erzeugt, aufgrund der die Wertdokumentbearbeitungsvorrichtung das Erscheinen oder Schließen eines Anzeigefensters im Bedienerdisplay veranlasst. Durch eine Geste des Bedieners kann auch eine Steuerinformation erzeugt werden, aufgrund der eine Cursor-Bewegung auf dem Bedienerdisplay veranlasst wird, so dass der Cursor - an Stelle mittels einer Computermaus - mittels Gesten bewegt werden kann. Der Cursor kann mittels einer Geste auch sprunghaft an eine bestimmte Stelle auf dem Bedienerdisplay gesetzt werden, z.B. in ein Eingabefeld.

Es kann auch vorgesehen sein, dass die Wertdokumentbearbeitungsvorrichtung empfangene Eingabeinformationen in geeigneter Weise quittiert. Empfangene Steuerbefehle können zur Bestätigung und/oder Kontrolle beispielsweise angezeigt oder akustisch ausgegeben werden. Gleiches gilt für empfangene Eingabedaten. Diese Art von Feedback erlaubt eine Kontrolle durch die Bedienperson, beispielsweise bei kritischen Steuerbefehlen oder zur Abschlusskontrolle nach einer Dateneingabe.

Die Wertdokumentbearbeitungsvorrichtung kann eine Prüfvorrichtung für Wertdokumente sein, z.B. eine Sortiervorrichtung, sie kann aber auch eine Handnacharbeitsvorrichtung für Wertdokumente sein, in der Wertdokumente, die bei einer ersten Prüfung zurückgewiesen wurden (z.B. Reject-Banknoten), nachbearbeitet bzw. erfasst werden.

Entsprechend umfasst ein erfindungsgemäßes System zur Bearbeitung von Wertdokumenten eine Kameraeinrichtung, eine Bildverarbeitungseinrichtung und eine Wertdokumentbearbeitungsvorrichtung. Die Kameraeinrichtung ist dabei eingerichtet, eine Aktion einer Bedienperson der Wertdokumentbearbeitungsvorrichtung zu erfassen. Die Bildverarbeitungseinrichtung ist eingerichtet, von der Kameraeinrichtung erfasste Bilddaten zu verarbeiten und aus den verarbeiteten Bilddaten zumindest eine Geste zu extrahieren. Die Wertdokumentbearbeitungsvorrichtung ist eingerichtet, eine einer Geste zugeordnete Eingabeinformation von der Bildverarbeitungseinrichtung zu zu verarbeiten.

Die Erfindung ermöglicht es demnach, die Dateneingabe in eine Wertdokumentbearbeitungsvorrichtung und ggf. die Steuerung einer Wertdokumentbearbeitungsvorrichtung erheblich zu erleichtern. Einfache Gesten der Bedienperson können zur Steuerung der Wertdokumentbearbeitungsvorrichtung und zur Dateneingabe verwendet werden. Eine manuelle Interaktion der Bedienperson mit Eingabeschnittstellen der Vorrichtung wird verzichtbar. Dies ermöglicht eine Steuerung der Wertdokumentbearbeitungsvorrichtung auch aus einer gewissen Entfernung. Ein direkter Kontakt, beispielsweise durch Drücken von Knöpfen, Betätigen von Hebeln oder dergleichen sowie eine direkte Dateneingabe durch Betätigen einer Tastatur oder einer Touchscreen können dadurch entfallen. Das Arbeiten mit der Vorrichtung wird dadurch einfacher und schneller.

Im Zusammenhang mit der vorliegenden Erfindung ist der Begriff der "Geste" breit auszulegen. Grundsätzlich kann eine Geste jeder charakteristischen Information entsprechen, welche aus Bilddaten extrahiert werden kann, die eine Aktion einer Bedienperson erfassen. Eine Geste kann beispielsweise einer vorgegebenen Körperhaltung der Bedienperson oder einer vorgegebenen Stellung eines oder mehrerer Körperteile der Bedienperson entsprechen. Standardgesten zur Steuerung der Vorrichtung können beispielsweise einer vorgegebenen Stellung eines oder beider Arme im Vergleich zum Rumpf der Bedienperson entsprechen. Verschiedene Stellungen einer Hand einer Bedienperson und/oder eines oder mehrerer Finger der Hand sind geeignete Gesten zum Bilden einer Eingabeinformation. Die Geste kann z.B. aus der Gebärdensprache von Taubstummen stammen. Auch ein Gesichtsausdruck einer Bedienperson und/oder Augenbewegungen können als Geste dienen. Schließlich können vorgegebene Bewegungen des Körpers und/oder eines Körperteils der Bedienperson einer vorgegebenen Geste zur Eingabe einer Eingabeinformation in die Wertdokumentbearbeitungsvorrichtung entsprechen.

Auch die An- oder Abwesenheit einer Bedienperson oder die Entfernung der Bedienperson zur Wertdokumentbearbeitungsvorrichtung kann aus den Bilddaten extrahiert werden und in eine Eingabeinformation für die Wertdokumentbearbeitungsvorrichtung, z.B. in eine Steuerinformation, einfließen. So kann z.B. in Abhängigkeit der An- oder Abwesenheit oder Entfernung der Bedienperson eine bestimmte Aktion der Wertdokumentbearbeitungsvorrichtung, die einer aus den Bilddaten extrahierten Geste zugeordnet ist, ausgeführt, zugelassen oder verhindert werden. Zum Beispiel darf die Wertdokumentbearbeitungsvorrichtung eine bestimmte Aktion nur dann ausführen oder zulassen, wenn eine Bedienpersonen in unmittelbarer Nähe der Wertdokumentbearbeitungsvorrichtung ist. Die Wertdokumentbearbeitungsvorrichtung verarbeitet z.B. bestimmte Eingabeinformationen nur dann, wenn sich mindestens zwei Bedienpersonen in unmittelbarer Nähe der Wertdokumentbearbeitungsvorrichtung aufhalten (Vieraugenprinzip). Es kann gefordert sein, dass es sich dabei um bestimmte Bedienpersonen handelt, die sich gegenüber der Vorrichtung zuvor zu erkennen gegeben haben oder automatisch durch die Vorrichtung erkannt wurden, z.B. um einen Operator und einen Supervisor.

Aus den verarbeiteten Bilddaten können auch mehrere Gesten mehrerer Bedienpersonen der Wertdokumentbearbeitungsvorrichtung extrahiert werden, die gleichzeitig oder zeitlich zueinander versetzt von diesen Bedienpersonen abgegeben werden. Diese Gesten können in dieselbe Steuerinformation für die Vorrichtung einfließen oder in verschiedene Steuerinformationen für die Vorrichtung. Die Bedienpersonen können von der Vorrichtung automatisch erkannt werden, z.B. mittels Gesichtserkennung oder anhand biometrischer Daten.

Eine komplexe Geste kann dabei aus zwei oder mehr aufeinanderfolgenden Teilgesten zusammengesetzt sein. Eine Eingabeinformation kann beispielsweise aus einer Steuerinformation für ein vorgegebenes Modul der Wertdokumentbearbeitungsvorrichtung bestehen, welche das Modul anweist, einen Bearbeitungsvorgang zu beginnen. Die Geste kann dabei z.B. aus drei Teilgesten bestehen. Die erste Teilgeste deutet an, dass eine Steuerinformation bezeichnet wird, im Gegensatz zu einer Dateneingabeinformation. Die zweite Teilgeste bezeichnet das spezifische Modul, an welches die Steuerinformation gerichtet ist. Die dritte Teilgeste schließlich bezeichnet die Art der Steuerinformation, z.B. das Beginnen eines Bearbeitungsvorgangs. Auf diese Weise kann aus einer kleinen Zahl verschiedener Teilgesten eine große Anzahl komplexer Kombinationsgesten zusammengestellt werden. Die zum Verarbeiten der Teilgesten notwendige Mustererkennung ist einfach, die Anzahl erzeugbarer Gesten trotzdem sehr hoch, entsprechend hoch ist die Anzahl verschiedener eingebbarer Eingabeinformationen. Da die komplexe Gesten aus Teilgesten zusammengesetzt werden, können diese vom Bedienpersonal schnell und einfach erlernt werden. Dadurch entfallen lange Einarbeitungszeiten und häufige Bedienungsfehler können vermieden werden. Beispielsweise wird einer Geste als Eingabeinformation eine Steuerinformation zugeordnet. Mittels des Eingebens der Steuerinformation wird die Wertdokumentbearbeitungsvorrichtung gesteuert. Grundsätzlich können nahezu beliebige Operationen der Wertdokumentbearbeitungsvorrichtung auf diese Weise gesteuert werden, wie beispielsweise das Öffnen/Schließen einer Abdeckung oder einer Haube der Vorrichtung, das Starten oder Stoppen beliebiger Bearbeitungsvorgänge einzelner Module der Vorrichtung, z.B. das Starten oder Stoppen des Transports der Wertdokumente und/oder der Vereinzelung der Wertdokumente.

Gemäß der Erfindung wird einer Geste als Eingabeinformation eine Dateneingabeinformation zugeordnet. Mittels der Dateneingabeinformation erfolgt dann eine Dateneingabe in die Wertdokumentbearbeitungsvorrichtung. Die Dateneingabe kann dabei insbesondere die von der Wertdokumentbearbeitungsvorrichtung bearbeiteten Wertdokumente betreffen.

Grundsätzlich können auf diese Weise aber beliebige Daten in die Wertdokumentbearbeitungsvorrichtung eingegeben werden, ohne dass dazu eine herkömmliche manuelle Eingabevorrichtung, wie beispielsweise eine Tastatur oder dergleichen, benötigt wird. Eine Dateneingabe kann berührungslos, ähnlich einfach wie eine Spracheingabe, erfolgen. Im Vergleich zur Spracheingabe ergibt sich der Vorteil, dass eine Gestenerkennung durch Maschinenlärm und sonstige Nebengeräusche nicht beeinträchtigt wird.

Im Zusammenhang mit der Bearbeitung von Wertdokumenten kann, wie erwähnt, eine Dateneingabeinformation insbesondere eine Eigenschaft eines bearbeiteten Wertdokuments betreffen. Eigenschaften bearbeiteter Wertdokumente sind beispielsweise deren Echtheit, deren Denomination, deren Umlauffähigkeit etc. Die Dateneingabeinformation kann somit insbesondere dazu dienen, entsprechende Eigenschaften bearbeiteter Wertdokumente automatisch zu erfassen, während eine Bedienperson die Wertdokumente manuell bearbeitet, beispielsweise bei einer manuellen Nachbearbeitung oder - prüfung der Wertdokumente.

Gemäß der Erfindung wird einer Dateneingabeinformation ein vorgegebener räumlicher Bereich im Arbeitsbereich der Bedienperson zugeordnet, der ein ausgezeichnetes Areal auf einer Arbeitsfläche ist. Die Dateneingabeinformation wird einer Geste zugeordnet, wobei die Geste wiederum einer Körperstellung und/oder einer Bewegung der Bedienperson entspricht, mittels welcher die Bedienperson den räumlichen Bereich auswählt, welcher der Dateneingabeinformation zugeordnet worden ist. Die Bedienperson wählt den Bereich dadurch aus, dass sie ein Wertdokument in diesem Bereich abgelegt.

Von der Wertdokumentbearbeitungsvorrichtung nicht erkannte oder als Fälschungen beurteilte Wertdokumente, insbesondere Reject-Banknoten, werden üblicherweise in einem separaten Bearbeitungsschritt von einer Bedienperson nochmals manuell untersucht und beurteilt. Durch die Erfindung können der Wertdokumentbearbeitungsvorrichtung besonders einfach Daten zur Verfügung gestellt werden, welche die Wertdokumente betreffen, die von der Bedienperson im Rahmen einer manuellen Nachbearbeitung bearbeitet werden. Bei der Nachbearbeitung legt die Bedienperson beispielsweise echte und falsche Banknoten oder Reject-Banknoten in Abhängigkeit der Reject-Ursache auf jeweils separaten Stapeln ab. Werden diese Stapel in vorgegebenen Arealen einer Arbeitsfläche der Bedienperson aufgestapelt, so können mit dem vorstehend beschriebenen Verfahren die jeweils abgelegten Wertdokumente durch die Erkennung der Geste des Ablegens auf dem betreffenden Stapel automatisch gezählt werden, ohne dass eine entsprechende Dateneingabe nachträglich separat durch die Bedienperson erfolgen muss. In gleicher Weise können, wenn die nachbearbeiteten Banknoten gemäß ihrer Stückelung in separaten Stapeln angeordnet werden, entsprechende Eingabedaten automatisch erfasst werden. Zusätzlich kann die Kameraeinrichtung Informationen über die abgelegten Wertdokumente erfassen und der Eingabeinformation hinzufügen, beispielsweise eine Seriennummer. Alternativ ist es möglich, dass die Kameraeinrichtung Informationen der Wertdokumente erfasst, um die Aktivität der Bedienperson zu kontrollieren. Beim Sortieren manuell geprüfter Banknoten nach deren Denomination können auf diese Weise beispielsweise Zuordnungsfehler einfach erkannt werden.

Die vorliegende Erfindung wird im Folgenden mit Bezug auf die beiliegenden Zeichnungen beispielhaft beschrieben. Darin zeigen:
- Figur 1: eine bevorzugte Ausführungsform eines erfindungsgemäßen Systems zur Bearbeitung von Wertdokumenten;
- Figur 2: Schritte einer bevorzugten Ausführungsform eines Verfahrens zur Bearbeitung von Wertdokumenten;
- Figur 3: beispielhaft eine aus mehreren Teilgesten zusammengesetzte komplexe Geste zur Steuerung einer Wertdokumentbearbeitungsvorrichtung aus Figur 1; und
- Figur 4: exemplarisch eine Geste zur Dateneingabe in eine Wertdokumentbearbeitungsvorrichtung aus Figur 1.

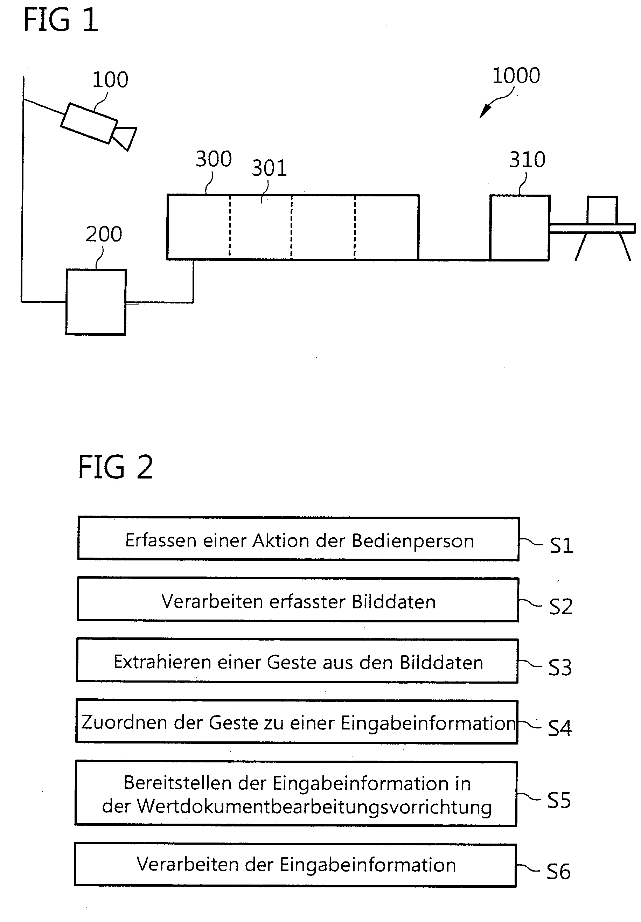

Ein in Figur 1 beispielhaft gezeigtes System 1000 zur Bearbeitung von Wertdokumenten umfasst eine Kameraeinrichtung 100, eine Bildverarbeitungseinrichtung 200 sowie eine Wertdokumentbearbeitungsvorrichtung 300.

Die Kameraeinrichtung 100 wird vorzugsweise in Form einer 3D-Kamera bereitgestellt, mittels welcher es möglich ist, eine Bedienperson der Wertdokumentbearbeitungsvorrichtung 300 räumlich zu erfassen. Auf diese Weise können beliebige Gesten der Bedienperson, wie beispielsweise Bewegungen des Körpers oder einzelner Körperteile der Bedienperson, Körperhaltungen sowie Stellungen einzelner Körperteile, wie beispielsweise der Arme, einer Hand, der Finger einer Hand etc. exakt erfasst und verarbeitet werden.

Während in Figur 1 lediglich eine Kamera 100 angedeutet ist, kann die Kameraeinrichtung 100 selbstverständlich aus einer Mehrzahl von Kameras bestehen. Bevorzugt ist die Verwendung einer oder mehrerer Stereo-Kameras oder einer oder mehrerer TOF-Kameras.

Die Bildverarbeitungseinrichtung 200 ist mit der Kameraeinrichtung 100 sowie der Wertdokumentbearbeitungsvorrichtung 300 verbunden. Die von der Kameraeinrichtung 100 erzeugten Bilddaten, in welchen eine Aktion einer Bedienperson enthalten ist, werden an die Bildverarbeitungseinrichtung 200 zur Verarbeitung weitergegeben. Die Bildverarbeitungseinrichtung 200 ist eingerichtet, die empfangenen Bilddaten zu verarbeiten. Insbesondere ist die Bildverarbeitungseinrichtung 200 eingerichtet, vorgegebene Gesten aus den verarbeiteten Bilddaten zu extrahieren.

Einer extrahierten Geste kann dann mittels der Bildverarbeitungsvorrichtung 200 eine vorgegebene Eingabeinformation für die Wertdokumentbearbeitungsvorrichtung 300 zugeordnet werden. Diese einer extrahierten Geste zugeordnete Eingabeinformation kann mittels der Bildverarbeitungsvorrichtung 200 an die Wertdokumentbearbeitungsvorrichtung 300 übermittelt und von derselben verarbeitet werden.

Als Bildverarbeitungseinrichtung 200 können bekannte, kommerziell erhältliche Systeme eingesetzt werden, wie beispielsweise das KINECT-System.

Die Wertdokumentbearbeitungsvorrichtung 300 ist beispielhaft in Form einer Banknotenbearbeitungsvorrichtung 300 dargestellt. Diese umfasst verschiedene Module, wie beispielsweise ein Eingabemodul, ein Vereinzelungsmodul 301, ein Basismodul mit einer Sensorstrecke, ein Zurückweisungsmodul, ein Ausgabemodul und ein Shreddermodul (nicht alle separat gezeigt). Weiterhin kann die Wertdokumentbearbeitungsvorrichtung 300 einen Handnachbearbeitungsplatz 310 für die manuelle Nachbearbeitung von vom Zurückweisungsmodul zurückgewiesener Banknoten umfassen.

Grundsätzlich unterscheidet sich die Wertdokumentbearbeitungsvorrichtung 300 nicht von bekannten Vorrichtungen dieser Art, mit Ausnahme der Datenverbindung zu der Bildverarbeitungseinrichtung 200 sowie der Fähigkeit zur Verarbeitung der Eingabeinformationen, die sie z.B. Beispiel von der Bildverarbeitungsvorrichtung 200 empfängt. Die Bildverarbeitungseinrichtung 200 kann außerhalb angeordnet oder in die Wertdokumentbearbeitungsvorrichtung 300 integriert sein.

Alternativ dazu extrahiert die Bildverarbeitungseinrichtung 200 lediglich die Geste aus den Bilddaten und sendet eine der Geste entsprechende Gesteninformation an die Wertdokumentbearbeitungsvorrichtung. Und die Wertdokumentbearbeitungsvorrichtung ordnet die der Geste entsprechende Gesteninformation der jeweiligen Eingabeinformation zu und verarbeitet diese.

Mit Bezug auf Figur 2 werden nachfolgend beispielhaft einzelne Schritte eines Verfahrens zur Bearbeitung von Wertdokumenten mittels des Systems aus Figur 1 beschrieben.

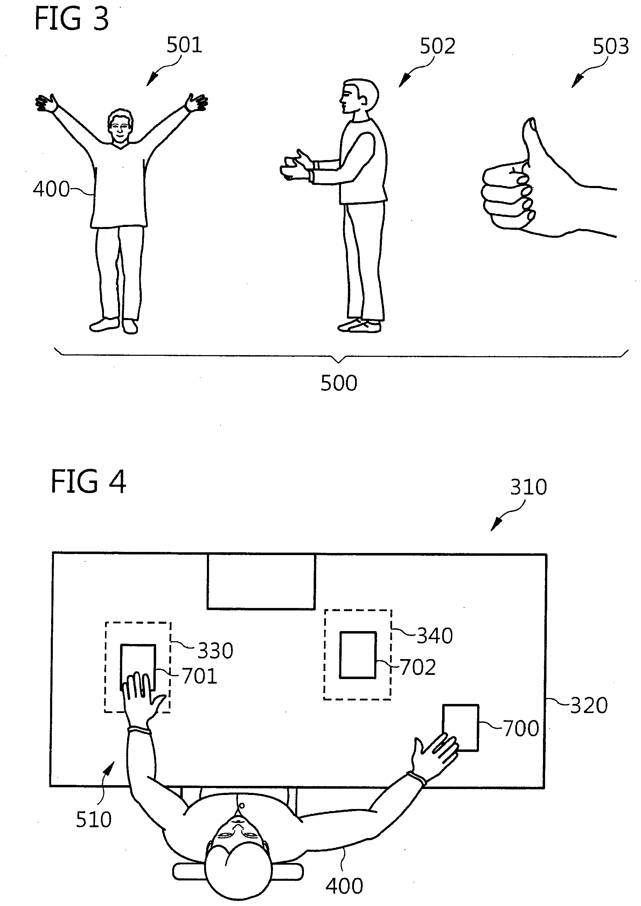

In einem ersten Schritt S1 erfasst die Kameraeinrichtung 100 eine Aktion einer Bedienperson 400 (vergleiche Figur 3) der Werfdokumentbearbeitungsvorrichtung 300. Eine entsprechende Aktion kann beispielsweise in einer spezifischen Steuergeste der Bedienperson 400 bestehen. Eine solche wird exemplarisch im Detail mit Bezug auf Figur 3 nachfolgend beschrieben. Eine Aktion der Bedienperson 400 kann alternativ beispielsweise auch ein manuelles Nachbearbeiten von Wertdokumenten 700 sein, welches nachfolgend mit Bezug auf Figur 4 beschrieben wird.

In Schritt S2 werden die von der Kameraeinrichtung 100 erfassten Bilddaten durch die Bildverarbeitungseinrichtung 200 verarbeitet.

In Schritt S3 extrahiert die Bildverarbeitungseinrichtung 200 zumindest eine Geste aus den verarbeiteten Bilddaten. Vorgegebene Gesten sind als Referenzdaten in der Bildbearbeitungseinrichtung 200 gespeichert. Art und Anzahl der Gesten können vorrichtungs- und anwendungsspezifisch variieren bzw. ergänzt werden.

In Schritt S4 ordnet die Bildverarbeitungseinrichtung 200 einer extrahierten Geste eine Eingabeinformation für die Banknotenbearbeitungsvorrichtung 300 zu. Eine solche Zuordnung ist in der Regel bereits vorab definiert und ebenfalls in der Bildverarbeitungseinrichtung gespeichert. Grundsätzlich kann jeder vorgegebenen Geste eine beliebige Eingabeinformation zugeordnet werden. Auf diese Weise kann das Verfahren optimal an die gegebenen Umstände angepasst werden. D.h. die Zuordnung von Gesten zu Eingabeinformationen ist frei programmierbar.

In Schritt S5 wird die der extrahierten Geste zugeordnete Eingabeinformation automatisch an die Wertdokumentbearbeitungsvorrichtung 300 eingegeben, indem die Bildverarbeitungseinrichtung 200 die entsprechende Eingabeinformation an die Vorrichtung 300 sendet. Eine separate Eingabeoperation durch die Bedienperson 400 ist dazu nicht erforderlich.

In Schritt S6 schließlich verarbeitet die Wertdokumentbearbeitungsvorrichtung 300 die empfangene Eingabeinformation.

Die Eingabeinformation dient zur Dateneingabe in die Wertdokumentbearbeitungsvorrichtung 300 und wird demgemäß in Form einer Dateneingabeinformation bereitgestellt. Gegebenenfalls kann auch eine Steuerinformation zur Steuerung der Wertdokumentbearbeitungsvorrichtung 300 als Eingabeinformation verwendet werden. In der Regel ist die Wertdokumentbearbeitungsvorrichtung 300 eingerichtet, Eingabeinformation sowohl in Form einer Steuerinformation als auch in Form einer Dateneingabeinformation zu empfangen und zu verarbeiten.

Mit Bezug auf Figur 3 wird exemplarisch das Eingeben einer Eingabeinformation in Form einer Steuerinformation beschrieben. Die Steuerinformation entspricht in diesem Fall dem Starten eines Bearbeitungsvorgangs eines spezifischen Moduls 301 der Banknotenbearbeitungseinrichtung 300, beispielsweise eines Vereinzelungsmoduls 301.

Um eine solche Steuerinformation einzugeben, kann die Bedienperson 400 durch eine Geste oder durch mehrere Teilgesten kommunizieren. Zum Beispiel entspricht die Geste 501 aus Fig. 3 dem Öffnen der Wertdokumentbearbeitungsvorrichtung und die Geste 502 dem Stoppen des Vereinzelers der Wertdokumentbearbeitungsvorrichtung.

Beispielsweise kann die Bedienperson 400 aber auch mittels dreier aufeinanderfolgender Teilgesten 501, 502 und 503 mit der Banknotenbearbeitungsvorrichtung 300 kommunizieren. Die Kombination dieser drei Teilgesten 501, 502, 503 ergibt eine komplexe Kombinationsgeste 500, welcher dann die entsprechende Steuerinformation zugeordnet wird.

Mit der ersten Teilgeste 501, einem Hochstrecken beider Arme, gibt die Bedienperson 400 an, dass eine Steuerinformation, im Gegensatz zu einer Dateneingabeinformation, eingegeben werden soll. Ein Hochstrecken beispielsweise nur eines Arms könnte dagegen eine Dateneingabeinformation bezeichnen.

Mit der Teilgeste 502, dem Zeigen auf das entsprechende Modul 301, wird angezeigt, dass die Steuerinformation das Modul 301 betrifft.

Die dritte Teilgeste 503, ein hochgereckter Daumen einer zur Faust geschlossenen Hand, bezeichnet das Starten der dem Modul zugeordneten Verarbeitungsoperation, im Beispiel also das Starten eines Vereinzelungsvorgangs.

In analoger Weise können komplexe Steuergesten aus einfachen Teilgesten zusammengesetzt werden. Wird beispielsweise die letzte Teilgeste 503 durch eine flache Hand ersetzt, so könnte die entsprechende kombinierte Geste, d.h. die Teilgesten 501, 502 in Kombination mit der flachen Hand, einem Steuerbefehl entsprechen, der die mittels der Geste 500 gestartete Operation wieder stoppt.

Mit Bezug auf Figur 4 wird das Eingaben einer Dateneingabeinformation exemplarisch dargestellt. Von der Banknotenbearbeitungsvorrichtung 300 zurückgewiesene Wertdokumente 700 werden durch eine Bedienperson 400 an dem Handnachbearbeitungsplatz 310 manuell nachbearbeitet, beispielsweise in echte und gefälschte Banknoten sortiert. Dabei stapelt die Bedienperson 400 echte Banknoten 701 auf einen ersten Stapel in einem vorgegebenen Bereich 330 sowie gefälschte Banknoten 702 auf einen zweiten Stapel in einem vorgegebenen Bereich 340 einer Arbeitsfläche 320.

Das Stapeln der Banknoten in den entsprechenden Bereichen 330, 340 wird von der Bildverarbeitungseinrichtung 200 als Geste des Auswählens der entsprechenden Bereiche erkannt und einer entsprechenden Dateneingabeinformation zugeordnet. Mit anderen Worten, jedes Mal, wenn die Bedienperson 400 eine echte Banknote 701 auf den Stapel im Bereich 330 legt, wird dies als Dateneingabeinformation an die Banknotenbearbeitungseinrichtung 300 weitergeleitet, womit die abgelegten echten Banknoten 701 automatisch gezählt werden können. Entsprechendes gilt für das Ablegen der gefälschten Banknoten 702 auf dem zweiten Stapel in Bereich 340.

Auf diese Weise kann allein dadurch, dass die Aktion der Bedienperson 400 während der manuellen Prüfung zurückgewiesener Banknoten mittels der Kameraeinrichtung 100 erfasst und entsprechende Bilddaten von der Bildverarbeitungseinrichtung 200 verarbeitet werden, ein Zählvorgang automatisch erfolgen. Ein bislang notwendiger Schritt einer Dateneingabe, welche das Ergebnis einer manuellen Nachbereitung umfasst, kann somit entfallen. Der Vorgang der Nachbearbeitung wird dadurch beschleunigt.

In analoger Weise können Daten einer manuellen Nachbearbeitung erfasst werden, wenn die Bedienperson beispielsweise Banknoten in Abhängigkeit ihrer Stückelung auf separate Stapel stapelt.

Die Kameraeinrichtung 100 in Kombination mit der Bildverarbeitungseinrichtung 200 können eine manuelle Nachbearbeitung weiter erleichtern, indem zusätzliche Daten automatisch erfasst und verarbeitet werden, wie z.B. Seriennummern verarbeiteter Wertdokumente. Das Erfassen von Einlieferungsbelegen, Banderolen, etc. während der Nachbearbeitung kann zusätzlich eine manuelle Nachbearbeitung unterstützen, da auch hier eine manuelle Dateneingabe eingespart werden kann. Zur verbesserten Fälschungsverarbeitung können weiterhin beispielsweise automatisch Bilddaten zu gefälschten Banknoten von der Kameraeinrichtung 100 erfasst und gespeichert werden. Es versteht sich, dass auch im Zusammenhang mit der Nachbearbeitung notwendige Steuerbefehle an die Banknotenverarbeitungsvorrichtung 300, wie beispielsweise ein Befehl zum Starten einer Abrechnung zu einer nachbearbeiteten Menge von Banknoten, gestengesteuert erfolgen kann.

## Patentansprüche

1. Verfahren zur Bearbeitung von Wertdokumenten, umfassend die Schritte:
- Erfassen (S1) einer Aktion einer Bedienperson (400) einer Wertdokumentbearbeitungsvorrichtung (300) mittels einer Kameraeinrichtung (100) und Erzeugen von Bilddaten der erfassten Aktion;
- Verarbeiten (S2) der erzeugten Bilddaten mittels einer Bildverarbeitungseinrichtung (200);
- Extrahieren (S3) zumindest einer Geste (500; 510) aus den verarbeiteten Bilddaten durch die Bildverarbeitungseinrichtung (200);
- Zuordnen (S4) der zumindest einen Geste (500; 510) zu einer Eingabeinformation für die Wertdokumentbearbeitungsvorrichtung, (300);
- Bereitstellen (S5) der Eingabeinformation in der Wertdokumentbearbeitungsvorrichtung (300) und
- Verarbeiten (S6) der Eingabeinformation durch die Wertdokumentbearbeitungsvorrichtung (300),
wobei der zumindest einen Geste (510) als Eingabeinformation eine Dateneingabeinformation zugeordnet wird und auf Basis der Dateneingabeinformation eine Dateneingabe in die Wertdokumentbearbeitungsvorrichtung (300) erfolgt, wobei der Dateneingabeinformation ein ausgezeichnetes Areal (330; 340) auf einer Arbeitsfläche in einem Arbeitsbereich der Bedienperson (400) zugeordnet wird und die Dateneingabeinformation einer Geste (510) zugeordnet wird, welche einer Körperstellung und/oder einer Bewegung der Bedienperson (400) entspricht, mittels welcher die Bedienperson (400) das ausgezeichnete Areal auf der Arbeitsfläche auswählt,
**dadurch gekennzeichnet, dass** die Bedienperson (400) das ausgezeichnete Areal auf der Arbeitsfläche im Arbeitsbereich der Bedienperson (400) dadurch auswählt, dass sie ein Wertdokument in dem ausgezeichneten Areal (330; 340) ablegt.

2. Verfahren nach Anspruch 1, **dadurch gekennzeichnet, dass** eine Geste einer vorgegebenen Körperhaltung (501; 502) der Bedienperson (400) oder einer vorgegebenen Stellung eines Körperteils (503) der Bedienperson (400) entspricht.

3. Verfahren nach Anspruch 1, **dadurch gekennzeichnet, dass** eine Geste einem vorgegebenen Gesichtsausdruck der Bedienperson (500) entspricht.

4. Verfahren nach Anspruch 1, **dadurch gekennzeichnet, dass** eine Geste einer vorgegebenen Bewegung des Körpers und/oder eines Körperteils der Bedienperson (400) entspricht.

5. Verfahren nach einem der Ansprüche 1 bis 4, **dadurch gekennzeichnet, dass** eine Geste (500) einer Mehrzahl aufeinanderfolgender Teilgesten (501, 502, 503) entspricht.

6. Verfahren nach einem der Ansprüche 1 bis 5, **dadurch gekennzeichnet, dass** die Dateneingabeinformation eine Eigenschaft eines bearbeiteten Wertdokuments (700) betrifft, wobei die Dateneingabeinformation insbesondere dazu dient, entsprechende Eigenschaften bearbeiteter Wertdokumente automatisch zu erfassen, während eine Bedienperson die Wertdokumente manuell bearbeitet.

7. Verfahren nach Anspruch 6, **dadurch gekennzeichnet, dass** die Dateneingabeinformation die Echtheit eines bearbeiteten Wertdokuments (700) betrifft.

8. Verfahren nach Anspruch 6, **dadurch gekennzeichnet, dass** die Dateneingabeinformation die Umlauffähigkeit eines bearbeiteten Wertdokuments (700) betrifft.

9. Verfahren nach Anspruch 6, **dadurch gekennzeichnet, dass** die Dateneingabeinformation die Denomination eines bearbeiteten Wertdokuments (700) betrifft.

10. Verfahren nach einem der Ansprüche 1 bis 9, **dadurch gekennzeichnet, dass** die jeweils abgelegten Wertdokumente durch die Erkennung der Geste des Ablegens auf dem betreffenden Stapel automatisch gezählt werden.

11. System (1000) zur Bearbeitung von Wertdokumenten, umfassend eine Kameraeinrichtung (100), eine Bildverarbeitungseinrichtung (200) und eine Wertdokumentbearbeitungsvorrichtung (300), wobei die Kameraeinrichtung (100) eingerichtet ist, eine Aktion einer Bedienperson (400) der Wertdokumentbearbeitungsvorrichtung (300) zu erfassen und Bilddaten der erfassten Aktion zu erzeugen, die Bildverarbeitungseinrichtung (200) eingerichtet ist, die von der Kameraeinrichtung (100) erzeugten Bilddaten zu verarbeiten und aus den verarbeiteten Bilddaten zumindest eine Geste (500; 510) zu extrahieren, und die Wertdokumentbearbeitungsvorrichtung (300) eingerichtet ist, eine der Geste (500; 510) zugeordnete Eingabeinformation, die in der Wertdokumentbearbeitungsvorrichtung (300) bereitgestellt ist, zu verarbeiten, wobei die Wertdokumentbearbeitungsvorrichtung eingerichtet ist, zur Dateneingabe in die Wertdokumentbearbeitungsvorrichtung (300) eine Eingabeinformation in Form einer Dateneingabeinformation zu verarbeiten, der ein ausgezeichnetes Areal (330; 340) auf einer Arbeitsfläche im Arbeitsbereich der Bedienperson (400) zugeordnet ist,
**dadurch gekennzeichnet, dass** die Wertdokumentbearbeitungsvorrichtung eingerichtet ist, die Dateneingabeinformation einer Geste (510) zuzuordnen, welche einer Körperstellung und/oder einer Bewegung der Bedienperson (400) entspricht, mittels welcher die Bedienperson (400) das ausgezeichnete Areal auf der Arbeitsfläche durch Ablegen eines Wertdokuments in dem ausgezeichneten Areal auswählt.

12. System (1000) nach Anspruch 11, **dadurch gekennzeichnet, dass** die Bildverarbeitungseinrichtung (200) eingerichtet ist, eine der extrahierten Geste entsprechende Gesteninformation an die Wertdokumentbearbeitungsvorrichtung (300) zu senden, und die Wertdokumentbearbeitungsvorrichtung (300) dazu eingerichtet ist, die Gesteninformation einer Eingabeinformation für die Wertdokumentbearbeitungsvorrichtung (300) zuzuordnen.

13. System (1000) nach Anspruch 11 oder 12, **dadurch gekennzeichnet, dass** die Bildverarbeitungseinrichtung (200) eingerichtet ist, die extrahierte Geste einer Eingabeinformation für die Wertdokumentbearbeitungsvorrichtung (300) zuzuordnen und diese an die Wertdokumentbearbeitungsvorrichtung (300) zu senden und die Wertdokumentbearbeitungsvorrichtung (300) eingerichtet ist, die von der Bildverarbeitungseinrichtung (200) gesendete Eingabeinformation zu empfangen und zu verarbeiten.

14. System (1000) nach einem der Ansprüche 11 bis 13, **dadurch gekennzeichnet, dass** die Kameraeinrichtung (100) als 3D-Kamera, insbesondere als Stereokamera oder TOF-Kamera, ausgebildet ist.

## Claims

1. A method for processing value documents, comprising the steps of:
- detecting (S1) an action of an operator (400) of a value-document processing apparatus (300) by means of a camera device (100) and generating image data of the detected action;
- processing (S2) the generated image data by means of an image processing device (200);
- extracting (S3) at least one gesture (500; 510) from the processed image data by the image processing device (200);
- allocating (S4) the at least one gesture (500; 510) to an input information item for the value-document processing apparatus (300);
- providing (S5) the input information item in the value-document processing apparatus (300) and
- processing (S6) the input information item by the value-document processing apparatus (300),
wherein a data input information item is allocated to the at least one gesture (510) as the input information item and, on the basis of the data input information item, a data input into the value-document processing apparatus (300) is effected, wherein a specific area (330; 340) on a working surface in a working region of the operator (400) is allocated to the data input information item, and the data input information item is allocated to a gesture (510) which corresponds to a body position and/or a movement of the operator (400) by means of which the operator (400) selects the specific area on the working surface,
**characterized in that** the operator (400) selects the specific area on the working surface in the working region of the operator (400) by depositing a value document in the specific area (330; 340).

2. The method according to claim 1, **characterized in that** a gesture corresponds to a predetermined physical posture (501; 502) of the operator (400) or a predetermined position of a body part (503) of the operator (400).

3. The method according to claim 1, **characterized in that** a gesture corresponds to a predetermined facial expression of the operator (500).

4. The method according to claim 1, **characterized in that** a gesture corresponds to a predetermined movement of the body and/or of a body part of the operator (400).

5. The method according to any of claims 1 to 4, **characterized in that** a gesture (500) corresponds to a plurality of consecutive partial gestures (501, 502, 503).

6. The method according to any of claims 1 to 5, **characterized in that** the data input information item concerns a property of a processed value document (700), wherein the data input information item serves in particular to automatically detect corresponding properties of processed value documents while an operator processes the value documents manually.

7. The method according to claim 6, **characterized in that** the data input information item concerns the authenticity of a processed value document (700).

8. The method according to claim 6, **characterized in that** the data input information item concerns the fitness for circulation of a processed value document (700).

9. The method according to claim 6, **characterized in that** the data input information item concerns the denomination of a processed value document (700).

10. The method according to any of claims 1 to 9, **characterized in that** the value documents deposited in each case are automatically counted by the detection of the gesture of depositing on the corresponding stack.

11. A system (1000) for processing value documents, comprising a camera device (100), an image processing device (200) and a value-document processing apparatus (300), wherein the camera device (100) is adapted to detect an action of an operator (400) of the value-document processing apparatus (300) and to generate image data of the detected action, the image processing device (200) is adapted to process the image data generated by the camera device (100) and to extract from the processed image data at least one gesture (500; 510), and the value-document processing apparatus (300) is adapted to process an input information item allocated to the gesture (500; 510), said input information item being provided in the value-document processing apparatus (300), wherein the value-document processing apparatus is adapted, for the purpose of inputting data in the value-document processing apparatus (300), to process an input information item in the form of a data input information item to which a specific area (330; 340) on a working surface in the working region of the operator (400) is allocated, **characterized in that** the value-document processing apparatus is adapted to allocate the data input information item to a gesture (510) which corresponds to a body position and/or a movement of the operator (400) by means of which the operator (400) selects the specific area on the working surface by depositing a value document in the specific area.

12. The system (1000) according to claim 11, **characterized in that** the image processing device (200) is adapted to send a gesture information item corresponding to the extracted gesture to the value-document processing apparatus (300), and the value-document processing apparatus (300) is adapted to allocate the gesture information item to an input information item for the value-document processing apparatus (300).

13. The system (1000) according to claim 11 or 12, **characterized in that** the image processing device (200) is adapted to allocate the extracted gesture to an input information item for the value-document processing apparatus (300) and to send said information item to the value-document processing apparatus (30), and the value-document processing apparatus (300) is adapted to receive and process the input information item sent by the image processing device (200).

14. The system (1000) according to any of claims 11 to 13, **characterized in that** the camera device (100) is configured as a 3D camera, in particular as a stereo camera or TOF camera.

## Revendications

1. Procédé de traitement de documents de valeur, comprenant les étapes :
- saisie (S1) d'une action d'un opérateur (400) d'un dispositif de traitement de documents de valeur (300) au moyen d'un équipement de caméra (100) et génération de données d'image de l'action saisie ;
- traitement (S2), au moyen d'un équipement de traitement d'images (200), des données d'image générées ;
- extraction (S3), par l'équipement de traitement d'images (200), d'au moins un geste (500; 510) des données d'image traitées ;
- affectation (S4) du au moins un geste (500; 510) à une information d'entrée pour le dispositif de traitement de documents de valeur (300) ;
- mise à disposition (S5) de l'information d'entrée dans le dispositif de traitement de documents de valeur (300), et
- traitement (S6) de l'information d'entrée par le dispositif de traitement de documents de valeur (300),
cependant que, au au moins un geste (510), en tant qu'information d'entrée une information d'entrée de données est affectée et que, sur la base de l'information d'entrée de données, une entrée de données a lieu dans le dispositif de traitement de documents de valeur (300), cependant que, à l'information d'entrée de données, un aire spécifiée (330; 340) sur une surface de travail dans une zone de travail de l'opérateur (400) est affectée et l' information d'entrée de données est affectée à un geste (510) qui correspond à une posture corporelle et/ou à un mouvement de l'opérateur (400) au moyen de laquelle/duquel l'opérateur (400) choisit l'aire spécifiée sur la surface de travail,
**caractérisé en ce que** c'est en déposant un document de valeur dans l'aire spécifiée (330; 340) que l'opérateur (400) choisit l'aire spécifiée sur la surface de travail dans la zone de travail de l'opérateur (400).

2. Procédé selon la revendication 1, **caractérisé en ce qu'**un geste correspond à une posture
corporelle (501; 502) prédéterminée de l'opérateur (400) ou à une position prédéterminée d'une partie du corps (503) de l'opérateur (400).

3. Procédé selon la revendication 1, **caractérisé en ce qu'**un geste correspond à une expression du visage prédéterminée de l'opérateur (500).

4. Procédé selon la revendication 1, **caractérisé en ce qu'**un geste correspond à un mouvement prédéterminé du corps et/ou d'une partie du corps de l'opérateur (400).

5. Procédé selon une des revendications de 1 à 4, **caractérisé en ce qu'**un geste (500) correspond à une pluralité de gestes partiels successifs (501, 502, 503).

6. Procédé selon une des revendications de 1 à 5, **caractérisé en ce que** l'information d'entrée de données concerne une propriété d'un document de valeur traité (700), cependant que l'information d'entrée de données set en particulier à saisir automatiquement des propriétés correspondantes de documents de valeur traités pendant qu'un opérateur traite manuellement les documents de valeur.

7. Procédé selon la revendication 6, **caractérisé en ce que** l'information d'entrée de données concerne l'authenticité d'un document de valeur traité (700).

8. Procédé selon la revendication 6, **caractérisé en ce que** l'information d'entrée de données concerne l'aptitude à la circulation d'un document de valeur traité (700).

9. Procédé selon la revendication 6, **caractérisé en ce que** l'information d'entrée de données concerne la dénomination d'un document de valeur traité (700).

10. Procédé selon une des revendications de 1 à 9, **caractérisé en ce que** les documents de valeur respectivement posés sont, par la reconnaissance du geste de la dépose sur la pile concernée, comptés automatiquement.

11. Système (1000) de traitement de documents de valeur, comprenant un équipement de caméra (100), un équipement de traitement d'images (200) et un dispositif de traitement de documents de valeur (300), cependant que l'équipement de caméra (100) est conçu pour saisir une action d'un opérateur (400) du dispositif de traitement de documents de valeur (300) et pour générer des données d'image de l'action saisie, que l'équipement de traitement d'images (200) est conçu pour traiter les données d'image générées par l'équipement de caméra (100) et pour extraire au moins un geste (500; 510) des données d'image traitées, et que le dispositif de traitement de documents de valeur (300) est conçu pour traiter une information d'entrée affectée au geste (500; 510) qui est mise à disposition dans le dispositif de traitement de documents de valeur (300), cependant que le dispositif de traitement de documents de valeur est conçu pour, pour l' entrée de données dans le dispositif de traitement de documents de valeur (300), traiter une information d'entrée sous forme d'une information d'entrée de données à laquelle est affectée une aire spécifiée (330; 340) sur une surface de travail dans la zone de travail de l'opérateur (400), **caractérisé en ce que** le dispositif de traitement de documents de valeur est conçu pour affecter l'information d'entrée de données à un geste (510) qui correspond à une posture corporelle et/ou à un mouvement de l'opérateur (400) au moyen de laquelle/duquel l'opérateur (400), en déposant un document de valeur dans l'aire spécifiée, choisit l'aire spécifiée sur la surface de travail.

12. Système (1000) selon la revendication 11, **caractérisé en ce que** l'équipement de traitement d'images (200) est conçu pour envoyer au dispositif de traitement de documents de valeur (300) une information de geste correspondant au geste extrait, et que le dispositif de traitement de documents de valeur (300) est conçu pour affecter l'information de geste à une information d'entrée pour le dispositif de traitement de documents de valeur (300).

13. Système (1000) selon la revendication 11 ou 12, **caractérisé en ce que** l'équipement de traitement d'images (200) est conçu pour affecter le geste extrait à une information d'entrée pour le dispositif de traitement de documents de valeur (300) et pour envoyer cette dernière au dispositif de traitement de documents de valeur (300), et que le dispositif de traitement de documents de valeur (300) est conçu pour recevoir et traiter l'information d'entrée envoyée par l'équipement de traitement d'images (200).

14. Système (1000) selon une des revendications de 11 à 13, **caractérisé en ce que** l'équipement de caméra (100) est réalisé sous forme de caméra 3D, en particulier sous forme de caméra stéréo ou caméra TOF.
